# EUROPEAN PATENT APPLICATION

(11) **EP 1 995 727 A1**
(43) Date of publication of application: **26.11.2008**
(21) Application number: 07707592.7
(22) Date of filing: 29.01.2007
(51) Int. Cl.: G11B 17/051

(54) **DISC PLAYER, AND METHOD AND PROGRAM FOR CONTROLLING SUCH DISC PLAYER**

(30) Priority: 16.03.2006 JP 2006072562; 22.03.2006 JP 2006078359; 22.03.2006 JP 2006078370
(71) Applicant: CLARION Co., Ltd., Bunkyo-ku, Tokyo 112-8608 (JP)
(72) Inventor: SATO, Katsuhisa, Tokyo 112-8608 (JP); KODATE, Yasuhiko, Tokyo 112-8608 (JP); ITO, Tsutomu, Tokyo 112-8608 (JP)
(74) Representative: Glawe, Delfs, Moll
(86) International application number: PCT/JP2007/051361
(87) International publication number: WO 2007/108231

(57) **Abstract**

There is provided a disc player which does not require any mechanism for guiding a disc to the center inside a main body and any dedicated mechanism for preventing double insertion of discs, and can surely detect the disc diameter of not only general discs, but also partially-transparent discs. In order to attain this object, a disc player for loading a disc inserted in an insertion port into the inside of the main body to reproduce the disc is provided with a pair of gate members 59 which are disposed so as to be allocated to both the sides of the insertion port substantially with respect to the center of the insertion port and evacuated in the side direction of the insertion port in contact with the outer peripheral portion of the inserted disc.

## Description

### Technical Field

The present invention relates to a disc player that is mounted in a vehicle and reproduces information of a recording medium disc in CD (compact disk), DVD (digital versatile disc) or the like, and control method and control program for the disc player.

### Background Art

In conventional disc players such as CD, DVD players, etc. which are mounted in vehicle, a disc which his different in size, for example, an 8-cm disc, a 12-cm disc or the like is pulled in from an insertion port, and the disc which is pulled into the main body is clamped onto a turntable and chucked to reproduce the disc (for example, see Patent Document 1).
The size in the width direction of the insertion port of the main body is set so that at least a larger disc of 12cm can be pulled, and when a smaller disc of 8cm is inserted into the insertion port, it is difficult to insert the disc to the center of the insertion port.
In order to prevent plural discs from being pulled into the main body through the insertion port, an apparatus in which a double insertion preventing mechanism is provided to the insertion port has been proposed as one of the above type of apparatuses (for example, see Patent Document 2).
Patent Document: WO/2001/091119
Patent Document 2: J-UM-A-02-42240

### Disclosure of the Invention

### Problem to be solved by the Invention

When an 8-cm disc is pulled into the insertion port while displaced to one side of the insertion port, it cannot be accurately clamped onto the turntable if it is not shifted to the center of the main body. In order to solve this problem, a mechanism for guiding to the center of the inside of the main body an 8-cm disc which is sucked while displaced to one side is required, and this caused a problem that the apparatus must be designed in large size and particularly the dimension in the thickness direction of the apparatus is increased.

Furthermore, the conventional double insertion preventing mechanism is provided at the insertion port separately from the mechanism of pulling the disc into the main body and the reproducing mechanism, and this causes a problem that the apparatus is designed in larger size and particularly the dimension in the thickness direction of the apparatus is increased.

Furthermore, with respect to a disc player for reproducing discs different in diameter, in order to normally reproduce an inserted disc, it is necessary to detect the diameter (size) of the inserted disc. In this case, in a disc player which can reproduce both the 8-cm disc and the 12-cm disc, insertion of a disc is detected, and a reflection type or transmission type optical sensor is disposed at such a position that when a large-diameter disc of 12cm is inserted the disc concerned can be detected. The insertion of the disc is detected and when the reflection type optical sensor cannot detect the disc, it is judged that the 8-cm disc is inserted, and the operation control is performed.
However, there has recently existed a disc in which an originally data-writable area is designed to be transparent from the viewpoint of design. In this case, when the optical sensor detects such a disc at a partially transparent area thereof in the disc player, the optical sensor detects that there is no disc, and thus the diameter of the disc cannot be detected.

Therefore, an object of the present invention is to provide a disc player that can solve the problems of the conventional technique described above, and does not require any mechanism for guiding a disc to the center inside the main body, thereby implementing the thin design of the apparatus.
Furthermore, there is provided a disc player that does not require any dedicated mechanism for preventing double insertion of discs, thereby implementing the thin design of the apparatus.
Still furthermore, there are provided a disc player and control method and control program for the disc player with which the diameters of discs can be surely detected although these discs are not only general discs, but also partially transparent discs. Means of solving the Problem

In order to attain the above object, according to the present invention, according to the present invention, a disc player for loading a disc inserted in an insertion port to the inside of a main body to reproduce the disc is characterized by comprising a pair of gate members that are disposed so as to be allocated to both the sides of the insertion port substantially with respect to the center of the insertion port, brought into contact with the outer peripheral portion of the inserted disc and evacuated in a side direction of the insertion port.
In this construction, the pair of gate members are provided so as to be allocated to both the sides of the insertion port substantially with respect to the center of the insertion port, and each gate member is evacuated in the side direction of the insertion port in contact with the outer peripheral portion of the inserted disc. Accordingly, the disc is pulled into the center of the insertion port while not displaced to one side of the insertion port. Accordingly, a mechanism for guiding the disc substantially the center of the main body is not required, so that the apparatus can be miniaturized and particularly the dimension in the thickness direction of the apparatus can be reduced.

In this case, there may be provided lock means for preventing the evacuation of the pair of gate members in the side direction when the disc is inserted into the insertion port while displaced substantially from the center of the insertion port in the side direction of the insertion port.
Furthermore, there may be provided lock means for preventing the evacuation of the pair of gate members in the side direction when the disc is inserted into the insertion port under the state that the disc is displaced substantially from the center of the insertion port in the side direction of the insertion port and comes into contact with only one of the gate members.

In this construction, for example, when a smaller disc of 8cm is inserted while displaced substantially from the center of the insertion port in the side direction, the evacuation of the pair of gate members in the side direction is obstructed by the lock means, and thus the 8cm disc cannot be further inserted. Accordingly, the 8cm disc is prevented from being inserted while displaced from the center of the main body, and thus a mechanism for guiding the disc to the center in the main body is not required.

Furthermore, the pair of gate members may comprise a pair of turn plates that are freely swingably mounted through support members on the outer surface of a chassis of the main body, and a pair of gate pins that are secured to the turn plates so as to face the insertion port.
The pair of turn plates may be joined to each other at base portions thereof through a joint plate, the joint plate may be provided with a pin, the pin may be engagedly fitted in an elongated hole formed in the chassis, arcuate grooves may be formed at both the hole walls in the middle of the elongated hole so as to be expanded in diameter as compared with the width of the elongated hole, and when the disc is inserted while coming into contact with only one of the gate members, the pin may be engagedly fitted in one of the arcuate grooves to prevent the evacuation of the pair of gate members in the side direction.

The pair of turn plates may be joined to each other at base portions thereof through a joint plate, a guide hole may be formed in the joint plate so as to extend in a disc insertion direction, a guide portion that may be fitted in the guide hole is provided to a chassis, and the joint plate may be reciprocated in the disc insertion direction along the guide portion interlockingly with a swing motion of each of the turn plates. Furthermore, the guide portion may be formed integrally with the chassis by cutting and erecting a part of the chassis. Still furthermore, the pair of gate members may be urged to the center of the insertion port by urging means.

A loading roller mounted on a freely swingable roller plate may be disposed at the insertion port of the main body, the roller plate may be swung interlockingly with a pull-in operation of pulling a disc from the insertion port to a drive unit, thereby separating the loading roller from the drive unit, and the roller plate may be provided with a regulating unit for regulating the opening of the pair of gate members in the side direction when the disc is pulled in and the roller plate is swung interlockingly with the pull-in operation.

According to this construction, when the disc is pulled into the main body, the roller plate is swung interlockingly with the pull-in operation, whereby the loading roller mounted on the roller plate is separated from the drive unit, and the regulating unit provided to the roller plate regulates the opening of the gate members in the side direction, thereby preventing the double insertion of discs. Accordingly, a dedicated mechanism for preventing the double insertion of discs is not required, and thus the apparatus is miniaturized, so that the thin design of the apparatus can be implemented.

In this case, the regulating unit may be formed so as to project upwardly from the front end portion of the roller plate. Furthermore, a plurality of the regulating units may be formed so as to be spaced from one another at predetermined intervals. Still furthermore, the pair of gate members may comprise a pair of turn plates that are freely swingably mounted through support members on the outer surface of a chassis of the main body, and a pair of gate pins that may be secured to the turn plates and face the insertion port, the pair gate pins and the regulating units being overlapped with each other in the height direction of the insertion port.

In this case, The disc player may further comprises a first detector for detecting whether the swing angle of the gate members is equal to a first swing angle or more in connection with the passage of the disc, a second detector for detecting whether the swing angle of the gate members is not less than a second swing angle which is larger than the first swing angle in connection with the passage of the disc, and a disc diameter identifier for identifying the diameter of a disc as a loading target on the basis of time-variation of the detection state of the first detector and the detection state of the second detector in connection with the loading.
According to this construction, the first detector detects that the swing angle of the gate member is not less than the first swing angle or more in connection with the passage of the disc, and the second detector detects that the swing angle of the gate member is not less than the second swing angle larger than the first swing angle in connection with the passage of the disc.
Accordingly, the disc diameter identifier can identify the diameter of the disc as the loading target on the basis of the time-variation of the detection state of the first detector and the detection state of the second detector in connection with the loading.

In this case, the disc diameter detector may identify that a disc having a first diameter is loaded when only the first detector is set to the detection state from the start of the loading till the end of the loading in connection with the loading, and identify that a disc having a second diameter larger than the first diameter is loaded when both the first detector and the second detector are set to the detection states from the start of the loading till the end of the loading in connection with the loading.

Furthermore, the first detector and the second detector may have mechanical switches, and at least one of the gate members may be provided with an operation holding portion for actuating the mechanical switch in connection with a swinging motion of the gate member caused by the passage of the disc and holding the state concerned when the swing angle is within a predetermined swing angle range.
Still furthermore, there may be further provided a disc diameter data storage unit for storing an identification result of the disc diameter identifier as disc diameter data.

Still furthermore, there may be further provided a lock unit for preventing evacuation of the pair of gate members in the side direction when the disc is inserted into the insertion port while displaced substantially from the center of the insertion port in the side direction of the insertion port.
Still furthermore, the pair of gate members may be urged to the center of the insertion port by a urging member.

A method of controlling a disc player equipped with a pair of gate members that are disposed so as to be allocated to both the sides of an insertion port substantially with respect to the center of the insertion port and evacuated in a side direction of the insertion port while swung in contact with the outer peripheral portion of the inserted disc, an inserted disc inserted in the insertion port being loaded into the inside of the main body to reproduce the disc, comprises: a first detecting step of detecting whether a swing angle of the gate members is equal to a first swing angle or more in connection with passage of the disc; a second detecting step of detecting whether the swing angle of the gate members is not less than a second swing angle larger than the first swing angle in connection with the passage of the disc; and a disc diameter identifying step of identifying the diameter of a disc as a loading target on the basis of time-variation of the detection state of the first detector and the detection state of the second detector in connection with loading.

A control program of making a computer control a disc player having a pair of gate members that are disposed so as to be allocated to both the sides of an insertion port substantially with respect to the center of the insertion port and evacuated in a side direction of the insertion port while swung in contact with the outer peripheral portion of the inserted disc, a first detector for detecting whether a swing angle of the gate members is equal to a first swing angle or more, and a second detector for detecting whether the swing angle of the gate members is not less than a second swing angle larger than the first swing angle, an inserted disc inserted in the insertion port being loaded into the inside of the main body to reproduce the disc, comprises: detecting whether the swing angle of the gate members is equal to the first swing angle or more in connection with passage of the disc; detecting whether the swing angle of the gate members is not less than the second swing angle larger than the first swing angle in connection with the passage of the disc; and identifying the diameter of the disc as a loading target on the basis of the time-variation of the detection state of the swing angle in connection with the loading.

### Effect of the Invention

In the present invention, the pair of gate members are provided so as to be allocated to both the sides of the insertion port substantially with respect to the center of the insertion port. Therefore, each gate member comes into contact with the outer peripheral portion of the inserted disc and evacuates in the side direction of the insertion port, whereby the disc is pulled into the center of the insertion port without being displaced to one side of the insertion port. Accordingly, a mechanism for guiding the disc substantially to the center of the main body is unnecessary, so that the apparatus can be miniaturized and particularly the dimension in the thickness direction of the apparatus can be reduced.

Furthermore, when the disc is inserted into the insertion port while displaced substantially from the center of the insertion port in the side direction of the insertion port, evacuation of the pair of gate members in the side direction is prevented by the lock means. Therefore, the disc is prevented frombeing further inserted. Accordingly, the disc is prevented from being inserted with being displaced from the center of the main body, and the mechanism for guiding the disc to the center in the main body is unnecessary, so that the thin design of the apparatus can be implemented.
Still furthermore, when the disc is pulled into the main body, the roller plate is swung interlockingly with the pull-in operation, whereby the loading roller mounted on the roller plate is separated from the drive unit, and also the regulating unit provided to the roller plate regulate the opening of the gate members in the side direction, thereby preventing the double insertion of discs. Accordingly, a dedicated mechanism for preventing the double insertion of discs is unnecessary, so that the apparatus can be miniaturized and the thin design of the apparatus can be implemented.

Still furthermore, according to the present invention, the pair of gate members are provided to the insertion port, the diameter of the disc can be mechanically identified on the basis of the time-variation of the swing angle of the gate members in connection with the loading. Therefore, the disc diameters of not only general discs, but also partially-transparent discs can be surely detected.

### Brief Description of the Drawings

[Fig. 1] is a perspective view showing an embodiment of a disc player according to the present invention.
[Fig. 2] is a perspective view showing a state that an upper chassis is detached.
[Fig. 3] is a perspective view of a lower chassis.
[Fig. 4] is a left-side perspective view showing a state that a drive unit is attached to the lower chassis.
[Fig. 5] is a right-side perspective view showing a state that the drive unit is attached to the lower chassis.
[Fig. 6] is a perspective view showing a state of a roller plate before a disc is pulled in.
[Fig. 7] is a perspective view showing a state of the roller plate after the disc is pulled in.
[Fig. 8] is a perspective view showing a pair of gate members.
[Fig. 9] is a perspective view showing a state that the gate members are opened by a 12-cm disc.
[Fig. 10] is a perspective view showing a state that the gate members are opened by an 8-cm disc.
[Fig. 11] A is a perspective view when the upper chassis is viewed from the back side, and B is a diagram showing an elongated hole.
[Fig. 12] is a cross-sectional view when the 8-cm disc is inserted.
[Fig. 13] is a perspective view when the 8-cm disc is inserted.
[Fig. 14] is a cross-sectional view when the 12-cm disc is inserted.
[Fig. 15] is a perspective view when the 12-cm disc is inserted.
[Fig. 16] is a block diagram showing a control system.
[Fig. 17] is a processing flowchart (part 1) of a disc loading operation.
[Fig. 18] is a processing flowchart (part 2) of the disc loading operation.
[Fig. 19] is a diagram showing an initial state before the disc loading operation.
[Fig. 20] is a diagram showing just after the disc loading operation.
[Fig. 21] is a diagram when the 12-cm disc is being loaded.
[Fig. 22] is a diagram when the disc is loaded to a normal position.
[Fig. 23] is a diagram in a disc loading retry operation.
[Fig. 24] is a processing flowchart (part 1) of the loading retry operation.
[Fig. 25] is a processing flowchart (part 2) of the loading retry operation.
[Fig. 26] is a processing flowchart (part 1) of a full-eject operation.
[Fig. 27] is a processing flowchart (part 2) of the full-eject operation.

### Description of Reference Numerals

- 1: main body
- 3: chassis
- 5: lower chassis
- 7: upper chassis
- 23: insertion port
- 25: loading roller
- 27: roller plate
- 59: gate member
- 62, 63: turn plate
- 64, 65: pin (support member)
- 67, 68: gate pin
- 90: regulating unit
- 91, 92: pawl portion
- 100, 200: disc
- 107A, 107B: arcuate groove
- 110: controller (disc diameter identifier)
- SWA: loading switch (first detector, mechanical switch)
- SWB: re-loading switch (second detector, mechanical switch)
- SWC: chucking switch
- RK1, RK2: loading passage

### Best Modes for carrying out the Invention

An embodiment of the present invention will be described hereunder with reference to the drawings.

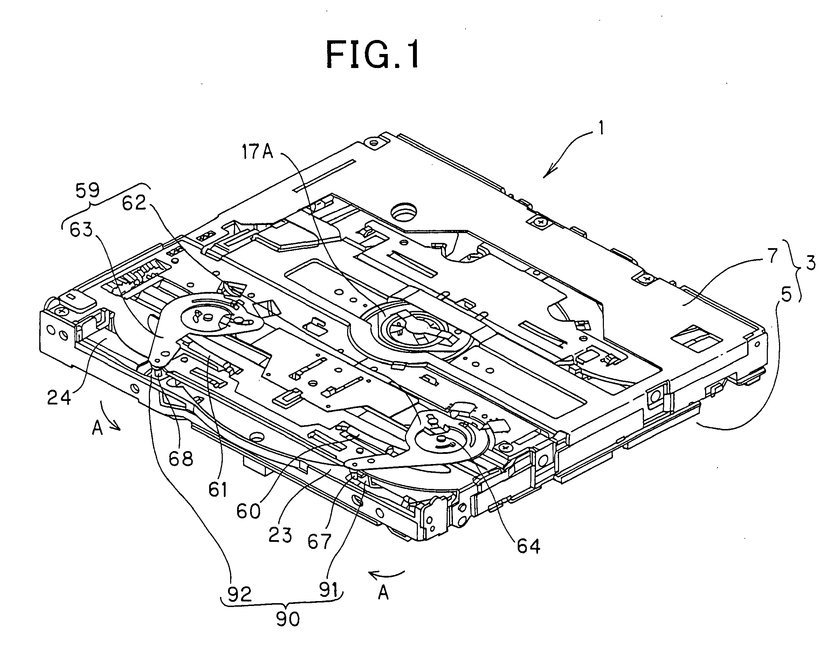

Fig. 1 is a perspective view showing the outlook of a disc player according to the present invention. Recording medium discs having different sizes of 8cm in diameter, 12cm in diameter, etc. such as CD, DVD, etc. are pulled into the disc player, and information recorded in these discs is reproduced. 1 represents main body, and the main body 1 is equipped with a chassis 3 of sheet metal. The chassis 3 has a lower chassis 5 and an upper chassis 7, and a loading mechanism for loading a disc, a clamper mechanism for clamping the disc, a drive mechanism for driving the disc, etc. are provided in the chassis 3.

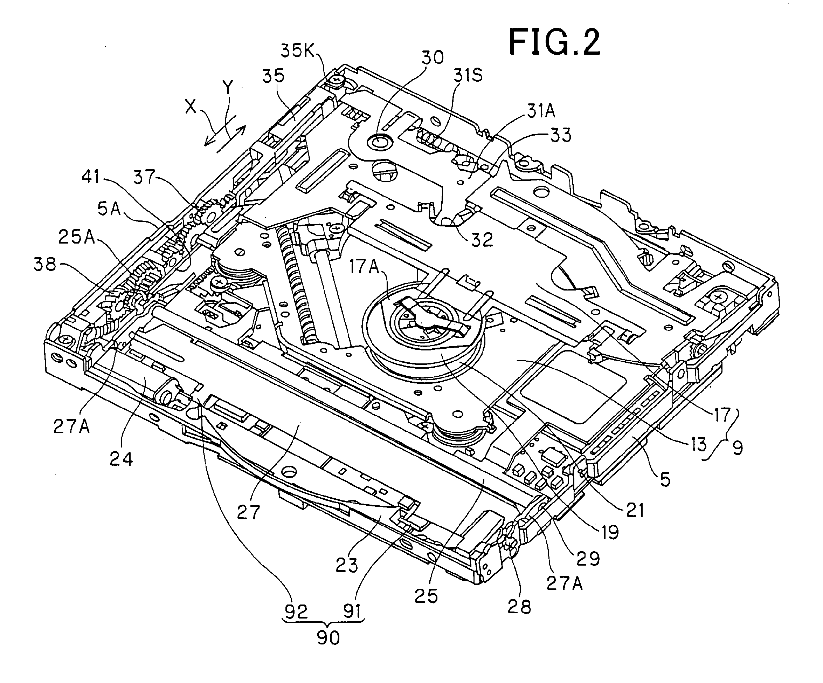

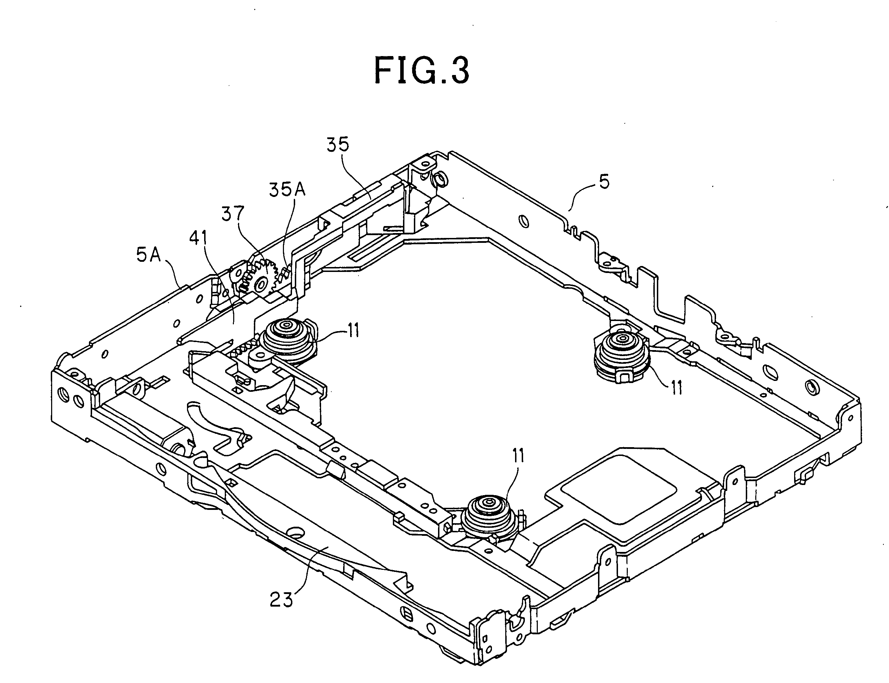

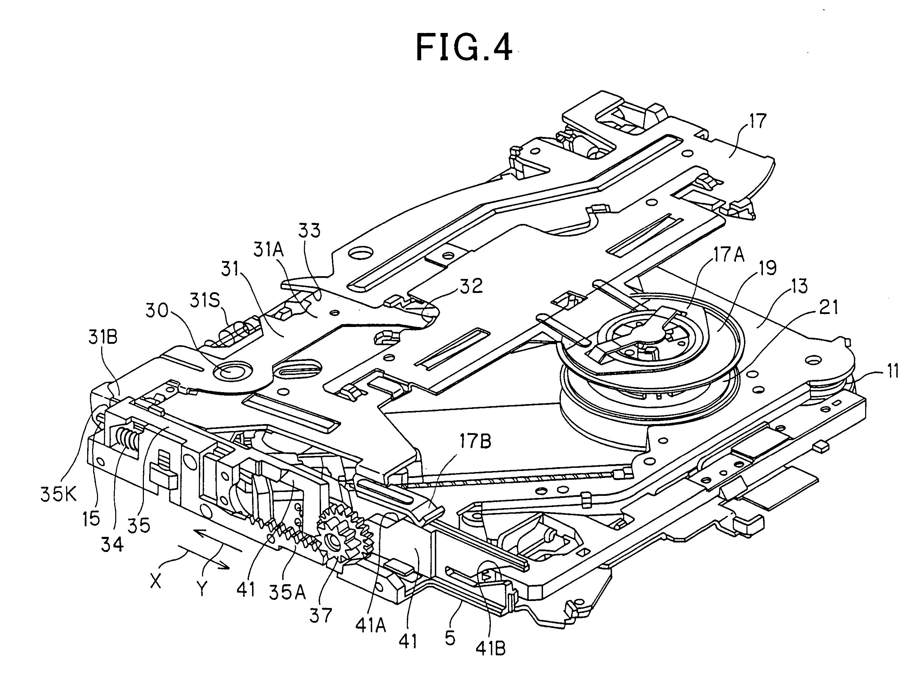

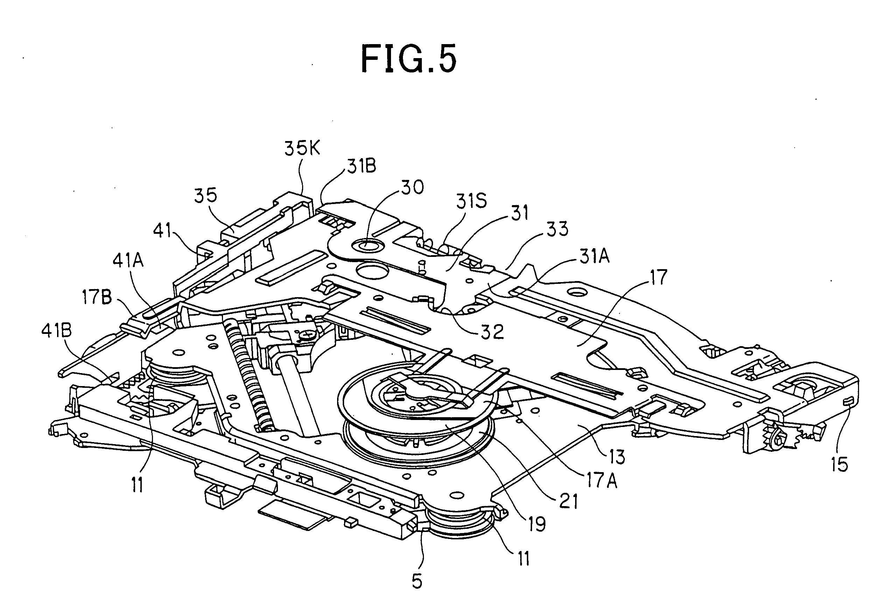

Fig. 2 is a perspective view showing a state that the upper chassis 7 is removed, Fig. 3 is a perspective view showing of the lower chassis 5, Fig. 4 is a left-side perspective view showing a state that a drive unit 9 is attached to the lower chassis 5, and Fig. 5 is a right-side perspective view showing a state that the drive unit 9 is attached to the lower chassis 5.

As shown in Fig. 3, the lower chassis 5 is designed in a frame-shape, and three antivibration structures 11 each having a damper and a spring are secured to the lower chassis 5. As shown in Fig. 2, the drive unit 9 which a clamper mechanism and a drive mechanism are integrated is mounted on the antivibration structures 11 and supported while floated.
As shown in Figs. 4 and 5, the drive unit 9 is equipped with a base plate 13, and a swing plate 17 which is joined to both the sides of the rear end portion of the base plate 13 through a hinge 15 and urged by a spring so as to close the tip end 17A and pinches a disc in cooperation with the base frame 13. A rotational plate 19 is mounted at the tip 17A of the swing plate 17, and a magnet-contained turntable 21 facing the rotational plate 19 is supported by the base plate 13. As described later, when a disc is inserted and the swing plate 17 is closed, the disc is pinched by the rotational plate 19 of the tip 17A and the turntable 21 so as to be rotatable.

As shown in Fig. 1, a laterally elongated disc insertion port 23 is formed at the front side of the main body 1, and a loading roller 25 which is driven by a motor 24 at the front portion of the lower chassis 5 is provided to the back side of the insertion port as shown in Fig. 2.
When the disc is detected, this loading roller 25 is driven by the motor 24 to be pulled the disc concerned into the main body 1. This loading roller 25 is supported by a roller plate 27. The roller plate 27 has crooked portions 27A formed by bending both the ends of the roller plate 27 upwardly, and a bearing portion 29 which supports the driving (rotating) shaft 5A of the loading roller so that the driving shaft 5A is freely rotatable is formed at the rear end side of the crooked portion 27A. Furthermore, a hinge pin 28 is provided at the front end side of the crooked portion 27A, and the roller plate 27 is joined to the side plate of the lower chassis 5 through the hinge pin 28 so as to be freely swingable. Accordingly, the loading roller 25 is displaced in height position by the swinging motion of the roller plate 27, so that the loading roller 25 can approach to and separate from the disc of the drive unit 9. Furthermore, the roller plate 27 is urged by a spring (not shown) so that the tip of the roller plate 27 is downwardly declined and the loading roller 28 is lifted up.

A trigger plate 31 is freely swingably supported at the left rear portion of the upper surface of the drive unit 9 through a support pin 30. The trigger plate 31 is urged in a counterclockwise direction by a spring 31S, and two pawl portions 32 and 33 which are bent to the inside of the drive unit 9 are integrally formed at one end 31a of the trigger plate 31. An 8-cm disc which is pulled in can abut against one pawl portion 32, and a 12-cm disc which is pulled in can abut against the other pawl potion. The other end 31B of the trigger plate 31 extends to the outside of the drive unit 9, and is bent downwardly along the outer wall of the drive unit 9. The other end 31B abuts against the rear surface 35K of a trigger 35 disposed on the lower chassis 5. When a disc is pulled into the main body 1 and abuts against any pawl portion 32, 33 and the trigger plate 31 is counterclockwise turned, the trigger plate 31 the trigger plate 31 makes the trigger 35 move forwardly (in the direction of an arrow X). This trigger 35 is normally urged to the other end 31B side (in the direction of an arrow Y) by a spring (not shown).

As shown in Fig. 4, a part of the trigger 35 extends to the front side of the bottom portion of the lower chassis 5, and a trigger rack gear 35A is integrally formed on the upper surface of this extension portion. A final gear 37 (see Fig. 3) which is mounted on the side plate 5A of the lower chassis 5 is disposed at the front side of the trigger rack gear 35A. The final gear 37 is normally mounted at such a position that it is not engaged with the trigger rack gear 35A, and it is engaged with the trigger rack gear 35A only when the trigger plate 31 is turned and thus the trigger 35 moves forwardly. As shown in Fig. 2, the final gear 37 is jointed to the motor 24 at the front potion of the lower chassis 5 through a gear train 38 comprising plural gears. If the trigger rack gear 35A and the final gear 37 are temporarily engaged with each other at the driving time of the motor 24, the trigger 35 moves forwardly by the driving force of the final gear 37 and the motor 24.

As shown in Fig. 4, a trigger cam 41 is integrally joined to the trigger 35. The trigger cam 41 extends inside the gear train 38 in parallel to the gear train 38, and a cam face 41A whose front portion is gradually stepwise higher is formed on the upper surface of the middle portion of the trigger cam 41. An upwardly-climbing stepwise slope groove 41B which guides the driving shaft 25A (see Fig. 2) of the loading roller 25 is formed at the tip portion of the trigger cam 41. A part 17B of the swing plate 17 of the drive unit 9 abuts against the cam face 41A.
After the trigger 35 engages with the final gear 37 and moves to the stroke end, the trigger cam 41 is pushed out, the rack of the trigger cam 41 engages with the final gear 37 and the trigger cam 41 moves forwardly (in the direction of the arrow X).

When the trigger cam 41 moves forwardly (in the direction of the arrow X), the cam face 41A with which the part 17B concerned is in contact is gradually lowered, and the swing plate 17 is swung in the closing direction by the spring force. When the trigger cam 41 further moves forwardly and thus moves to the forward movement limit position, the part 17B is completely separated from the cam face 41A, and clamping of the disc by the rotational plate 19 of the tip of the swing plate 17 and the turntable 21 is completed. At the same time, by the release of the fitting between the part 17B of the swing plate 17 and the cam face 41A, the drive unit 9 is completely floated and supported through the three antivibration structures 11.
Furthermore, the driving shaft 25A of the loading roller 25 moves to a low position along the slope groove 41B, the roller plate 27 is swung against the spring force, whereby the loading roller is displaced to a lower position and the loading roller 25 is separated from the lower surface of the disc under clamping. Under this state, the turntable 21 is rotated to reproduce the disc.

When the motor 24 is reversely rotated, the trigger 35 and the trigger cam 41 move backwardly (in the direction of the Y arrow) through the gear train 38, the final gear 37 and the trigger rack gear 35A. In connection with this movement, the cam face 41A with which the part 17B concerned is in contact is gradually higher, and the swing plate 17 is pushed up against the spring force and swung in the opening direction. Furthermore, when the trigger 35 and the trigger cam 41 further backwardly move and the trigger cam 41 moves to the backward-movement limit position , the part 17B runs upon the highest position of the cam face 41A, and a disc inserting gap is formed between the rotational plate 19 of the tip of the swing plate 17 and the turntable 21.

At the same time, the driving shaft 25A of the loading roller 25 gradually moves to a higher position along the slope groove 41B, and at the backward-movement limit position, the loading roller 25 is displaced to a high position until it comes into contact with the lower surface of the disc by the swing motion of the roller plate 27. Then, the disc is ejected by the loading roller 25.
After the disc is ejected, the display player is set to a loading standby state. Under the eject or loading standby state, the drive unit 9 is locked to the lower chassis 5 by a mechanism (not shown).

In this construction, as shown in Fig. 2, two pawl portions 91, 92 are integrally formed at the front end of the roller plate 27 so that a part of the roller plate 27 is upwardly erected and then bent in the horizontal direction. When the disc is pulled into the drive unit 9 and clamped, these pawl portions 91, 92 function as a regulating unit 90 which extends in the insertion port 23 (see Fig. 1) by the swinging motion of the roller plate 27 and regulates the opening of a pair of gate members 59 in the side (lateral) direction.
As described later in detail, the pair of gate members 59 have a pair of turn plates 62, 63 which are disposed so as to be allocated to both the sides substantially from the center portion with respect to the insertion port 23, and these turn plates 62, 63 are joined to the outer surface of the front portion of the upper chassis 7 by pins (support members) 64, 65, respectively. The turn plates 62, 63 are urged in the closing direction (the direction of an arrow A) by springs 60, 61, and a pair of gate pins 67, 68 which face the insertion port 23 are secured to the turn plates 62, 63.

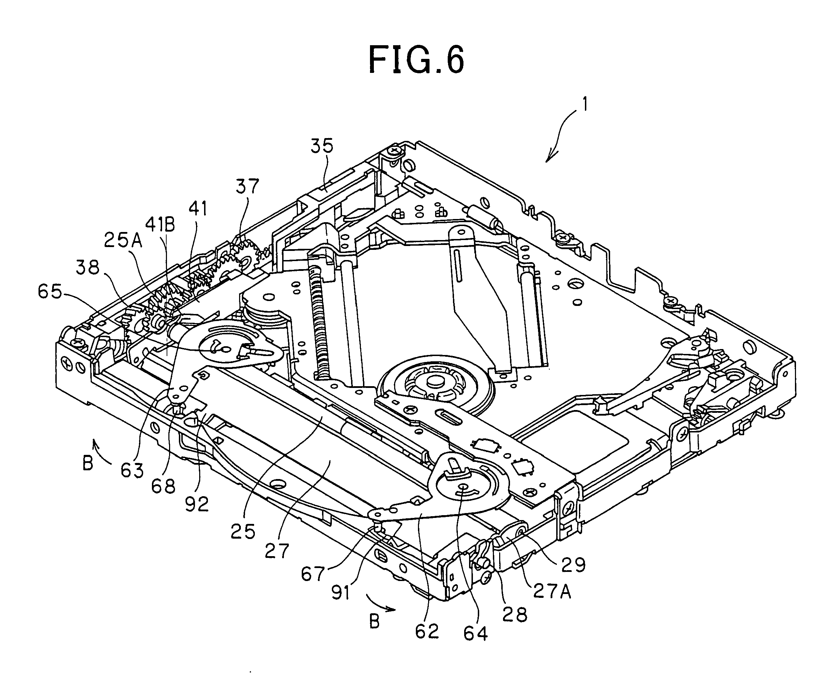

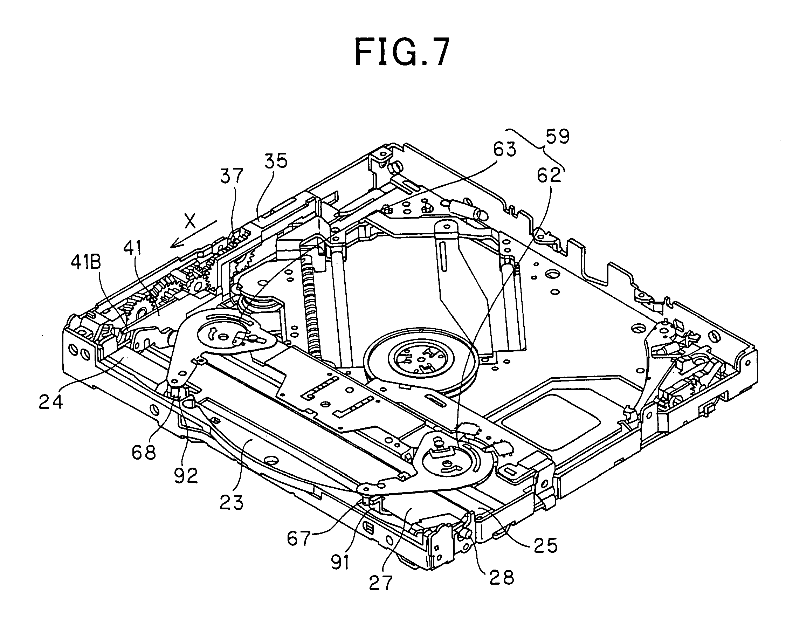

Fig. 6 is a perspective view showing the state of the roller plate 27 before the disc is pulled, and Fig. 7 is a perspective view showing the state of the roller plate 27 after the disc is pulled.
The pawl portions 91, 92 are located at the lower side of the lower surface of the insertion port 23 as shown in Fig. 6 when the disc 1 is pulled into the main body 1. Accordingly, when the disc is inserted, the turn plates 62, 63 of the gate members 59 are turned so as to be freely opened (in the direction of an arrow B) through the pins 64, 65, so that the pawl portions 92, 93 neither obstruct the insertion of the disc, nor damage the recording surface of the disc.

In the case where the disc is pulled into the main body 1, as shown in Fig. 7, when the trigger cam 41 moves forwardly (in the direction of the arrow X) and moves to the forward-movement limit position, the driving shaft 25A of the loading roller 25 is moved to a low position along the slope groove 41B, and the roller plate 27 is swung, whereby the pawl potions 92, 93 formed on the roller plate 27 are projected to the upper side of the lower surface of the insertion port 23. In this case, the pawl portions 92, 93 are formed so as to be spaced from each other at a predetermined interval so that they are located to be nearer to the sides of the insertion port 23 than the gate pins 67, 68, so that the projection of the pawl portions 92, 93 into the insertion port 23 prevents the turn plates 62, 63 of the gate members 59 from being turned in the opening direction (the direction of the arrow B), and thus the double insertion of the discs can be prevented. Accordingly, a dedicated mechanism for preventing the double insertion of discs is not required, so that the size of the apparatus is more remarkably miniaturized as compared with the conventional apparatus, and the thin design of this apparatus can be performed.
Furthermore, when the pawl portions 92, 93 are projected into the insertion port 23, the pawl portions 92, 93 are formed so as to be overlapped with the gate pins 67, 68 in the height direction of the insertion port 23. Therefore, it is unnecessary to project these pawl portions 92, 93 to the highest position of the insertion port 23, and the height of the pawl portions 92, 93 concerned can be suppressed to be lower than the height of the insertion port 23. Accordingly, when the disc is pulled into the main body 1, the distance between a disc feeding passage and the upper end portions of the pawl portions 92, 93 is kept to a large value, whereby the recording surface of the disc concerned can be prevented from being damaged.

In order to suppress the opening of the gate members 59 in the side direction, the gate pins 67, 68 and the pawl portions 92, 93 may be slightly overlapped with each other in the height direction. Therefore, the height of the pawl portions 92, 93 and the swing stroke of the roller plate 27 can be suppressed to small values. Accordingly, by reducing this swing stroke, the operation distance in the height direction of the roller plate 27 in the main body 1 can be set to a smaller value as compared with the prior art. Accordingly, the thickness of the main body 1 can be reduced, and the thin design of products can be performed.
In this construction, even when the swing stroke of the roller plate 27 is reduced, the pawl portions 92, 93 provided to the roller plate 27 are fitted to the gate pins 67, 68 provided to the turn plates 62, 63 of the gate members 59. Accordingly, the opening of the gate members 59 in the side direction thereof can be surely regulated, and the double insertion of discs can be surely prevented.

According to this embodiment, the loading roller 25 supported by the freely swingable roller plate 27 is disposed at the insertion port 23 of the main body 1, and when the disc is pulled from the insertion port 23 to the drive unit 9, the roller plate 27 is swung interlockingly with this pulling operation to separate the loading roller 25 from the drive unit 9. In addition, the pair of gate members 59 which are opened in the side direction of the insertion port 23 are provided in the neighborhood of the insertion port 23, and the regulating unit 90 for regulating the opening of the pair of gate members 59 in the side direction when the disc is pulled in and the roller plate 27 is swung interlockingly with the pulling operation, is provided to the roller plate 27. Accordingly, both the operation of separating the loading roller 25 from the drive unit 9 by swinging the roller plate 27 and the operation of regulating the opening of the gate members 59 in the side direction to prevent the double insertion of discs can be executed at the same time. Therefore, a dedicated mechanism for preventing the double insertion of discs is unnecessary, and the apparatus can be more miniaturized as compared with the prior art, so that the thin design of the apparatus can be performed.

According to this embodiment, the pair of gate members 59 comprise the pair of turn plates 62, 63 which are freely swingably mounted through the pins 64, 65 on the outer surface of the upper chassis 7 of the main body 1, and the pair of gate pins 67, 68 which are secured to the turn plates 62, 63 so as to face the insertion port 23. and the pair of gate pins 67, 68 and the pawl portions 92, 93 are disposed so as to be overlapped with each other in the height direction of the insertion port 23. Therefore, the swing stroke of the roller plate 27 provided with the pawl portions 92, 93 can be suppressed to a small value, and the operation distance in the height direction of the roller plate 27 in the main body 1 can be set to a smaller value as compared with the prior art. Accordingly, the thickness of the main body 1 can be reduced and the thin design of products can be performed.

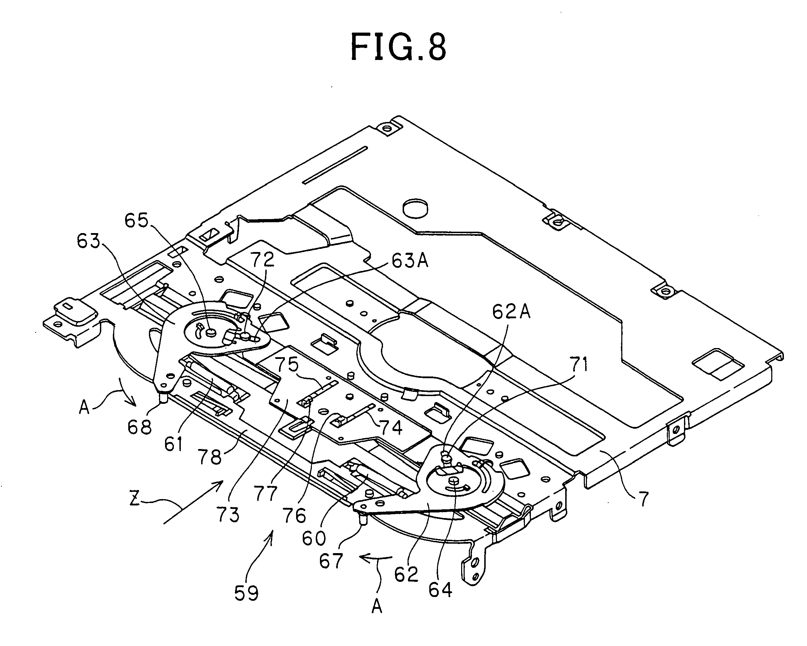

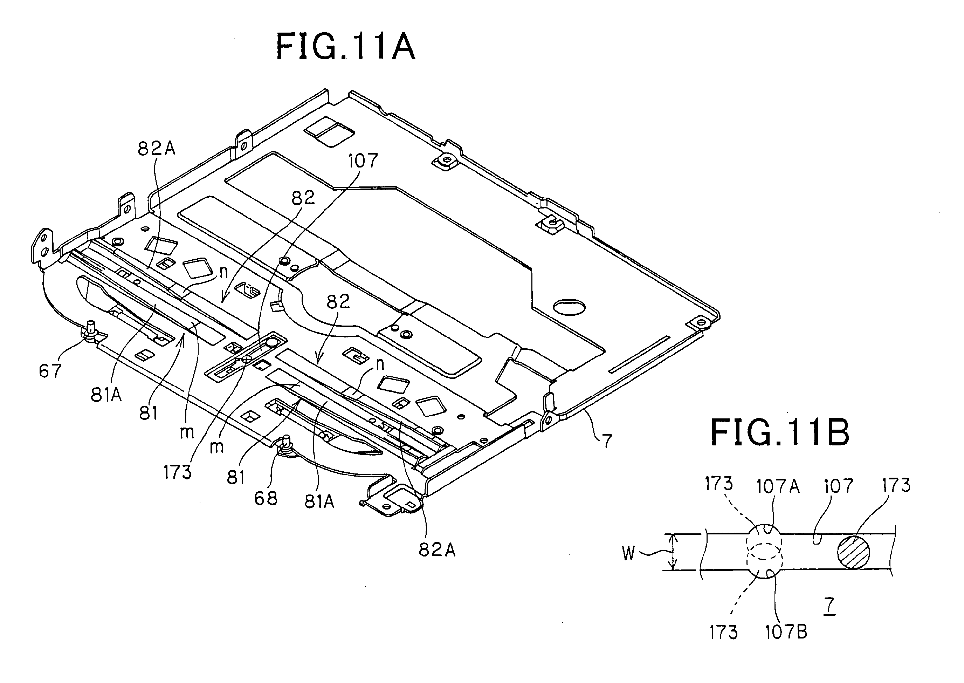

Furthermore, as described above, according to this construction, as shown in Fig. 1, the pair of gate members 59 which come into contact with the outer peripheral portion of an inserted disc and are retracted in the side direction of the insertion port 23 are provided at the disc insertion port 23.
Next, the construction of the gate members 59 will be described.
As shown in Fig. 8, the gate members 59 are provided with the pair of turn plates 62, 63 which are disposed so as to be allocated to both the sides with respect to substantially the center portion of the insertion pot 23, slide holes 62A, 63A re formed in the base portions of the turn plates 62, 63, and pins 71, 72 which are fitted in the slide holes 62A, 63A are secured to the joint plate 73. The base portions of the turn plates 62, 63 are joined to each other through the joint plate 73. A pin 173 is fixed to the joint plate 73, and as shown in Fig. 11, the joint pin 173 is engagedly fitted in an elongated hole 107 so as to face the lower surface of the upper chassis 7. Arcuate grooves 107A, 107B are formed at both the hole walls in the middle of the elongated hole 107 so as to be larger in diameter than the width W of the elongated hole 107. As shown in Fig. 8, a pair of guide holes 74, 75 extending in the disc insertion direction (the direction of an arrow Z) are formed in the joint plate 73, and guide portions 76, 76 are formed by cutting and erecting a part of the upper chassis 7 and then bending the erected part in the horizontal direction. The erected slender portions are fitted in the guide holes 74, 75. 78 represents a plate secured to the upper chassis 7, and this plate 78 functions as a stopper for the closing direction of the turn plates 62, 63.

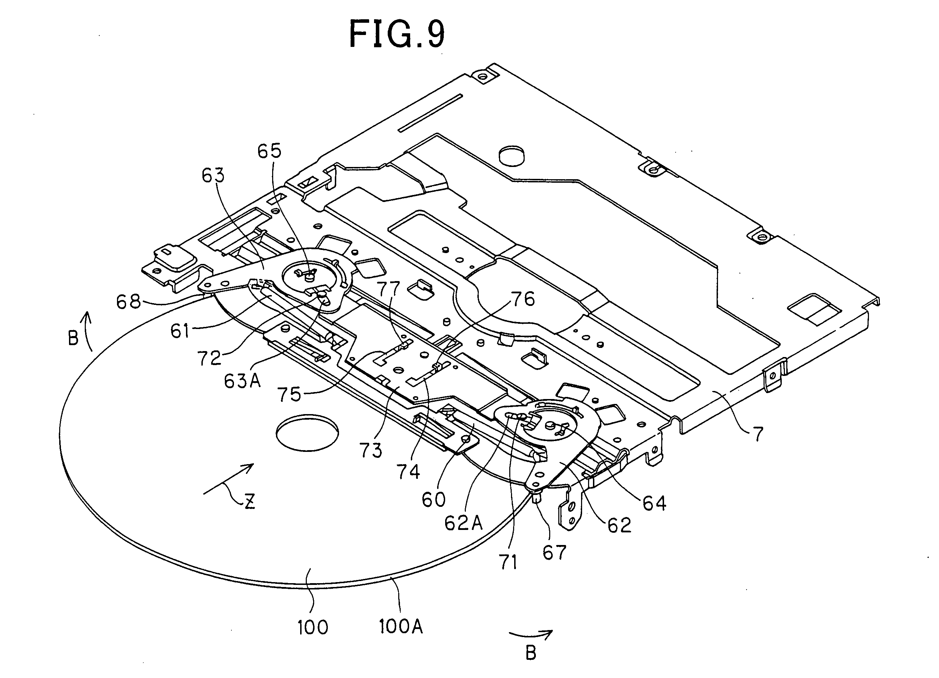

When the disc is inserted into the insertion port 23, the disc pushes out the gate pins 67, 68 in the side direction. For example, when a large disc 100 of 12cm in diameter is inserted, the outer peripheral portion 100A of the disc 100 pushes out the pair of gate pins 67, 68 in the side direction of the insertion port 23, and the turn plates 62, 63 are turned in the opening direction (the direction of the arrow B) as shown in Fig. 9. In connection with this swinging motion, the pins 71, 72 move in the slide holes 62A, 63A, whereby the joint plate 73 is reciprocated in the disc insertion direction (the direction of the arrow Z) along the guide portions 76, 77 interlockingly with the swing motion of the turn plates 62, 63.

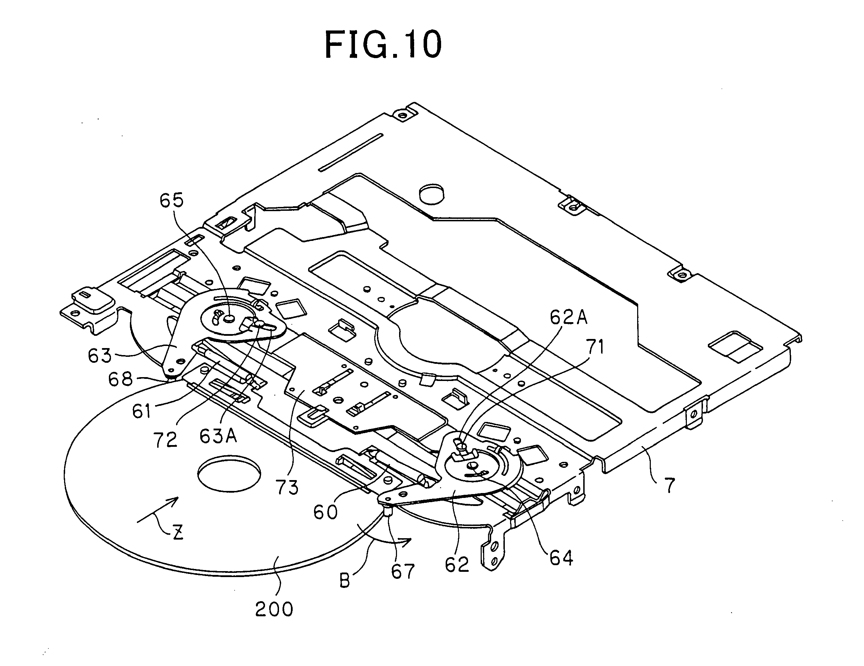

Fig. 10 is a perspective view showing insertion of a small disc of 8cm in diameter. In this case, the disc diameter is smaller than the width of the insertion port 23, and thus there is a risk that the disc is inserted while displaced to one end of the insertion port 23. For example, when the disc 200 is inserted while displaced to the gate pin 67 side, the disc pushes out only the pine 67 while little pushes out the other gate pin 68. In this case, only the turn plate 62 at the gate pin 67 side is turned in the opening direction (the direction of the arrow B).

In this construction, when the other turn plate 63 is not opened and only one turn plate 62 is opened, the joint plate 73 is not turned at the pin 72 side thereof, and the joint plate 73 is turned only at the pin 73 side thereof. In this case, the joint plate 73 is inclined.

When the joint plate 73 is inclined, the pin 173 moving in the elongated hole 107 is fitted into one arcuate groove 107A or 107B at the inclined side in the middle of the elongated hole 107 , and thus the joint plate 73 does not further move in the insertion direction (the direction of the arrow Z) of the disc 200. Accordingly, the turn plates 62, 63 are prevented from being further turned, and thus the insertion of the disc concerned is prevented. The same is satisfied in the case where the disc 200 is inserted while displaced to the other gate pin 68 side. The pin 173 and the arcuate grooves 107A, 107B constitute lock means.

That is, in this construction, when the disc 200 is inserted while displaced to an end of the insertion port 23, the pin 173 moving in the elongated hole 107 is fitted to one of the arcuate grooves 107A, 107B which is located at the inclined side in the middle of the elongated hole 107, and thus the joint plate cannot further move in the front-and-rear direction, so that the joint plate 73 is locked. According to this operation, the disc which is displaced to one end of the insertion port 23 is prohibited from being inserted.
Accordingly, a mechanism for guiding to the center inside the main body a disc which is pulled in while displaced to one side. Accordingly, the apparatus can be more miniaturized and particularly the dimension in the thickness of the apparatus can be reduced.

Fig. 11 is a perspective view of the upper chassis 7 when the upper chassis 7 is viewed from the back side. Guide bars (guide mechanisms) 81, 82 which project to the lower side (at the side confronting the loading roller 25) when the upper chassis 7 is assembled, guide the disc inserted into the insertion pot 23 downwardly (or upwardly) and extend so as to form a double line are provided on the inner surface of the upper chassis 7.

These guide bars 81, 82 extend in parallel to each other in the side direction of the insertion port 23, and each of the guide bars 81, 82 is gradually increased in height to the end of the insertion port 23. The front-side guide bar 81 is designed so that the height of the projection portion 81A thereof is gradually increased in height from a position nm near to the center, and the back-side guide bar 82 is designed so that the height of the projection portion 82A thereof is gradually increased from a position n which is more displaced to the end than the position m. The loading roller 25 confronts the pair of guide bars 81, 82, and the disc is loaded while pinched by the roller 25 and the guide bars 81, 82.

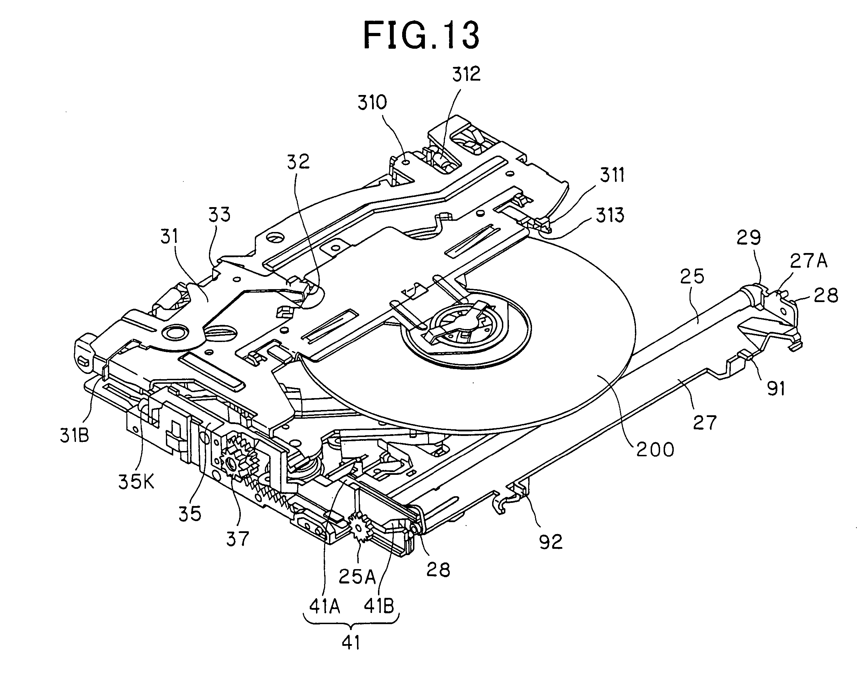

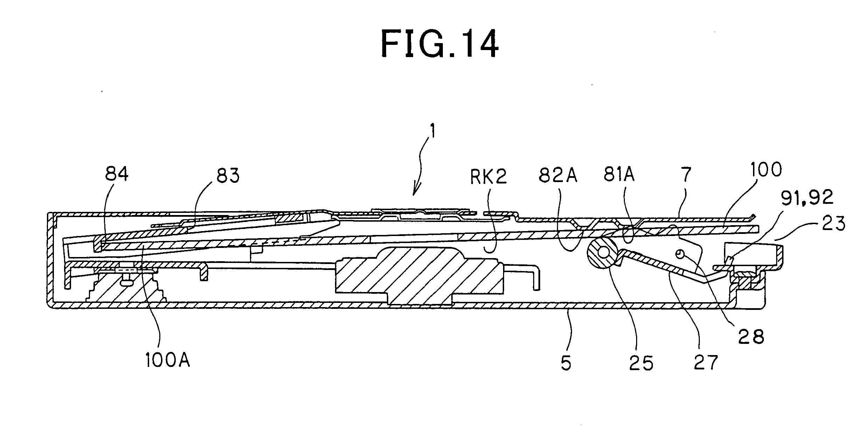

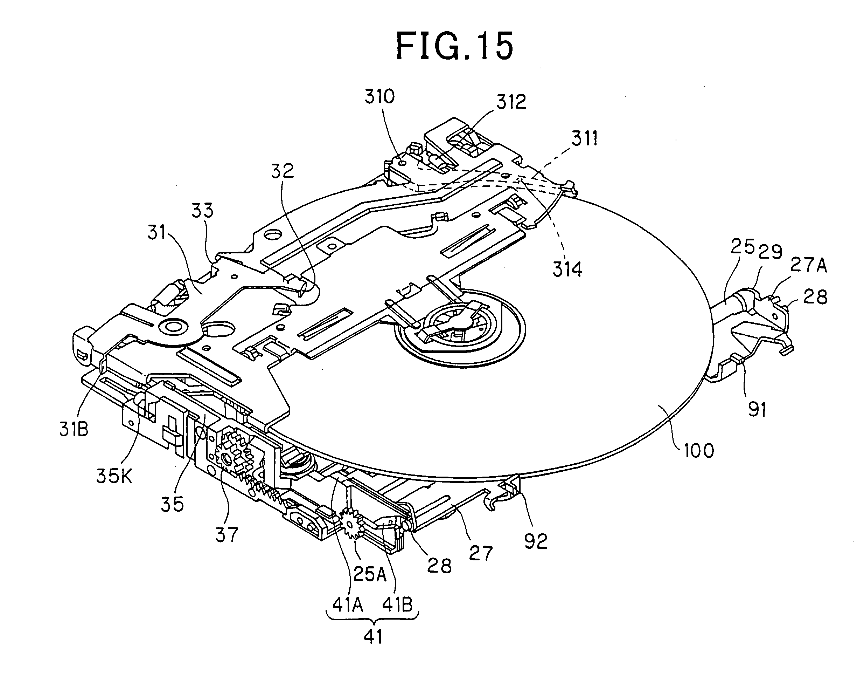

Fig. 2 is a cross-sectional view when the disc 200 of 8cm in diameter is inserted, Fig. 13 is a perspective view of Fig. 2, Fig. 14 is a cross-sectional view when the disc 100 of 12cm in diameter is inserted, and Fig. 15 is a perspective view of Fig. 14.

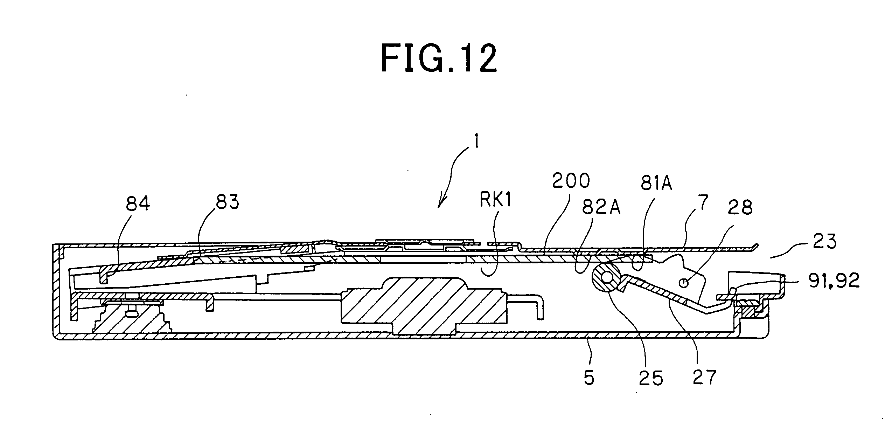

As shown in Fig. 12, when the disc 200 of 8cm in diameter is inserted, the disc 200 inserted from the insertion port 23 is pinched between the loading roller 25 and the lower projecting portions 81A, 82A of the guide bars 81, 82, and loaded to the back side of the main body 1 along a first loading passage RK located at a high place in the main body 1. A first disc contact portion 83 is located at the terminal portion of the first loading passage RK1, and the disc 200 is brought into contact with the first disc contact portion 83 and stopped. In this stage, the disc 200 pushes and moves the pawl portion 32 of the trigger plate 31 as shown in Fig. 13, and the clamp operation of the disc 200 is executed as described above with this push and movement as a trigger.

As shown in 14, when the disc 100 of 12cm in diameter is inserted, the disc 100 inserted from the insertion port 23 is pinched between the loading roller 25 and the higher projecting portions 81A, 82A of the guide bars 81, 82, and loaded to the back side of the main body 1 along a second loading passage RK2 located at a low place in the main body 1. As shown in Fig. 15, a guide bar 331 is formed so as to come into contact with the outer periphery (the right back side of Fig. 15) of the disc 100 of 12cm in diameter. The guide bar 331 is mounted so as to be swingable around a pin 310, and is urged clockwise around the pin 310 through a spring 312. As shown in Fig. 13, a backwardly-declined tapered face 313 is formed on the lower surface of the free end of the guide bar 331. When the disc 100 of 12cm in diameter is inserted, the tip 100A of the disc 100 is oriented to the lower side along the tapered face 313, and crosses the pawl portion 32 of the trigger plate 31. When the disc 100 further progresses to the back side, the guide bar 331 is counterclockwise turned around the pin 310, and stable loading is executed while the outer periphery of the disc 100 is guided by the guide bar 331 A second disc contact portion 84 is located at the terminal portion of a second loading passage RK2. The disc 100 comes into contact with the second disc contact portion 84 and stops there. In this stage, the disc 100 pushes and moves the pawl portion 33 of the trigger plate 31 as shown in Fig. 15, and the clamp operation of the disc 100 is executed as described above with this push and movement as a trigger. When the clamping is completed, the projection 314 of the lower surface of the guide bar 331 is fitted into a recess (not shown) of the swing plate 17 side, and the guide bar 331 is separated from the outer periphery of the disc 100, and fixed. Accordingly, the guide bar 331 is prevented from coming into contact with the disc 100 at the play time.

In this construction, the loading passage RK1 and the loading passage RK2 are formed separately at the upper and lower sides in the main body 1. Therefore, it is unnecessary to provide a complicated mechanism for holding discs different in diameter at the terminal portion of the loading passage, and thus the thin design of the apparatus can be implemented. Furthermore, this construction may be applied to a displayer for loading discs different in material or the like. In this case, if some ingenuity is applied to the loading passage and the guide bars 81, 82 in accordance with the material or the like, there is provide a disc player in which discs are not damaged.

Next, the specific disc loading operation will be described.

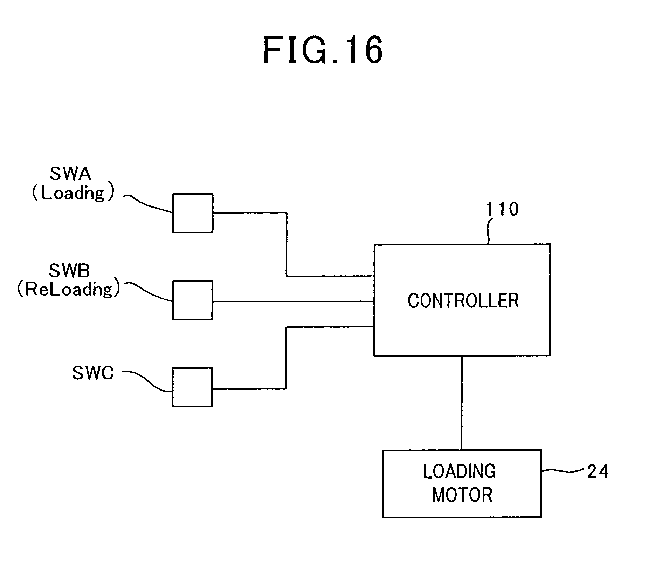

Fig. 16 is a block diagram showing the control system.
The control system comprises a controller 110 for controlling the whole apparatus, a loading switch SWA for detecting the loading position of a disc, a reloading switch SWA for detecting the reloading position of a disc, a chucking switch SWC for detecting the chucking position of a disc, and a loading motor 24 for loading a disc.

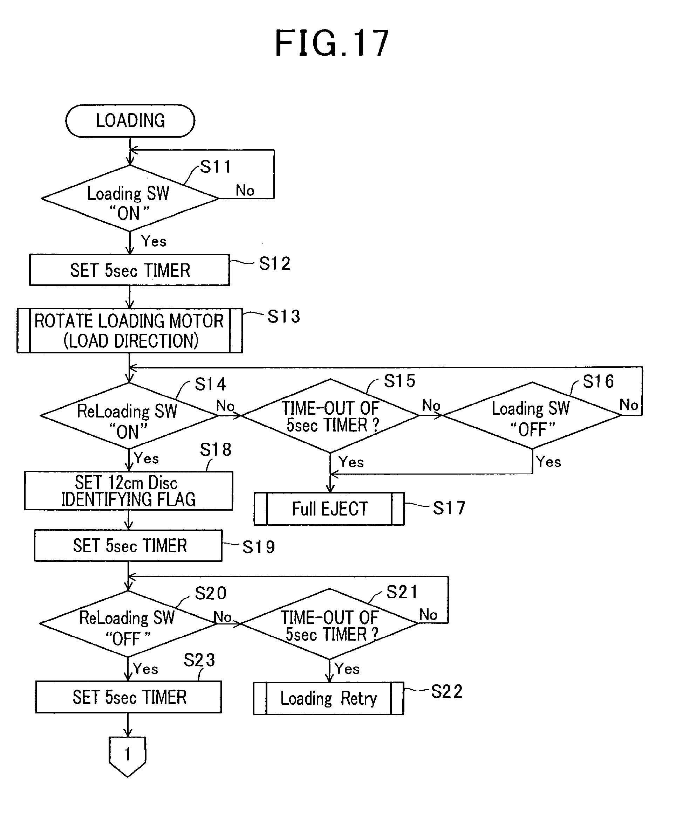

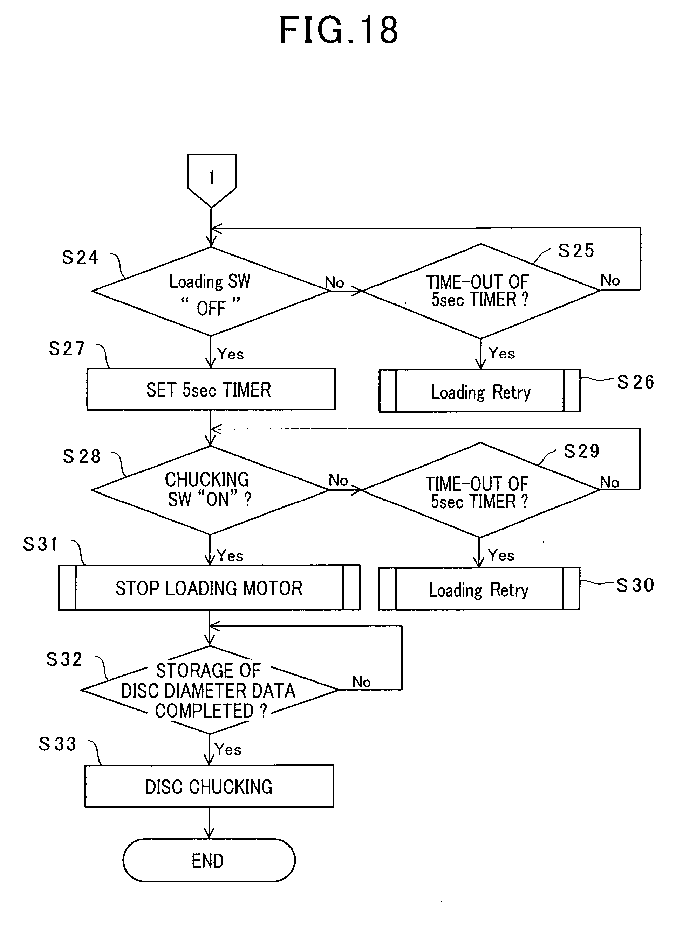

Fig. 17 is a processing flowchart (part 1) in the disc loading operation. Fig. 18 is a processing flowchart (part 2) in the disc loading operation.

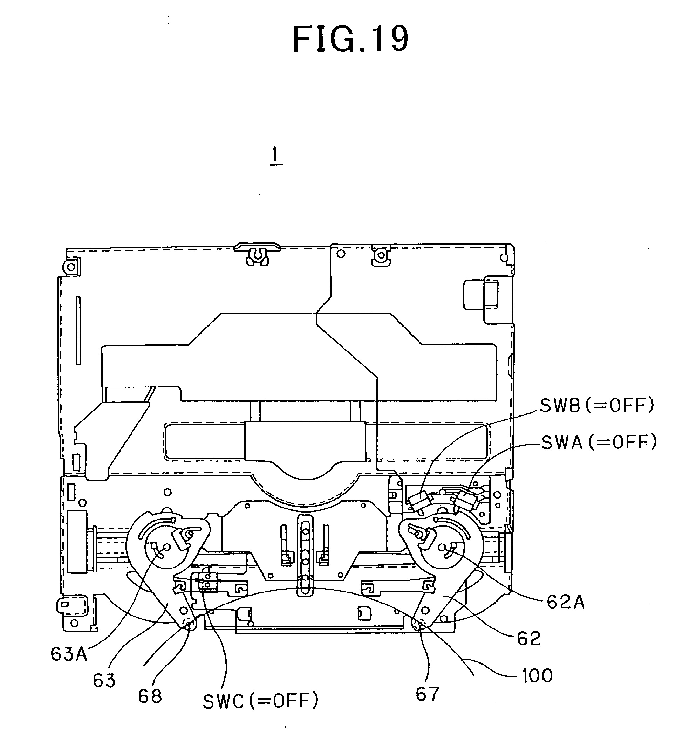

Fig. 19 is a diagram showing the initial state before disc loading.

First, on the basis of disc insertion and swinging of the turn plate 62, the controller 110 judges whether the loading switch SWA is set to ON-state by a projecting portion 62X and a sliding portion 62Y (step S11).
In the judgment of the step S11, when the loading switch SWA is set to OFF-state (step S11; No), a disc has not yet been inserted, and thus the controller 110 is set to a standby state.
In the judgment of the step S11, when the loading switch SWA of the turn plate 62 is set to ON-state (step S11; Yes), the disc has been inserted, and thus the controller 110 sets 5-sec timer (step S12).
Subsequently, the controller 110 executes motor rotating processing of rotating the loading motor 24 in a loading direction (the disc insertion direction) (step S13).
Furthermore, the controller 110 judges whether the re-loading switch SWB is set to ON-state by the projecting portion 62X and the sliding portion 62Y (step S14).

In the judgment of the step S14, if the reloading switch SWB is set to OFF state (step S13; No) , the controller 110 judges whether the 5-sec timer is time-out (step S15).
In the judgment of the step S15, if the 5-sec timer is time-out (step S15; Yes), the controller 110 shifts to full-eject processing described later because it fails in the disc loading (step S17).
In the judgment of step S15, if the 5-sec timer has not yet been time-out (step S15; No), the controller 110 judges again whether the loading switch SWA is set to ON-state (step S16).
In the judgment of the step S16, if the loading switch SWA is set to ON-state (step S16; Yes), the controller 110 fails the disc loading, and thus shifts to the full eject processing described later (step S17).

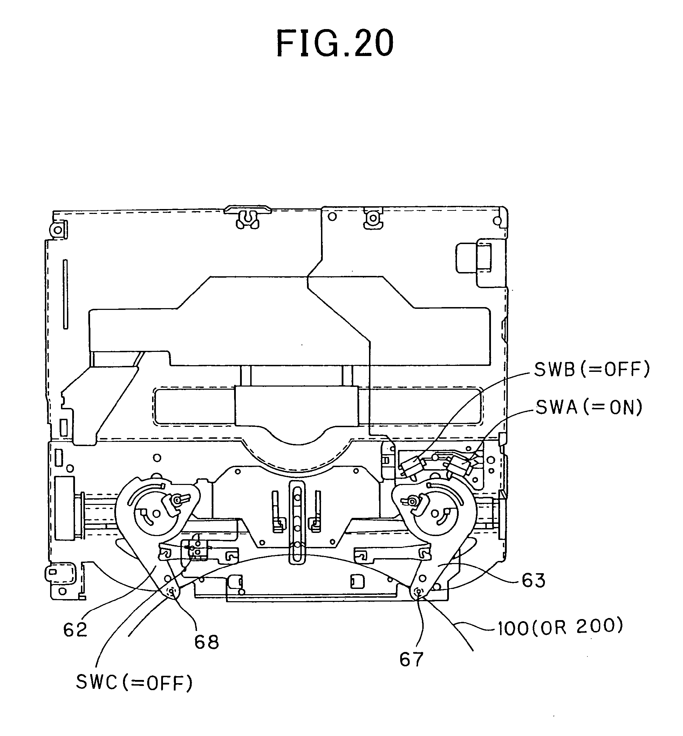

Fig. 20 is a diagram just after the disc loading.
In the judgment of step S16, as shown in Fig. 20, if the disc 100 (or 200) is inserted, the pair of the gate pins 67, 68 are pushed out to the lateral sides of the insertion port 23 and the loading switch SWA is set to ON-state by the turn plate 62 (step S16; No), the controller 110 shifts the processing to the step S14 again.
In the judgment of step S14, if the reloading switch SWB is set to ON-state (step S14; Yes), the controller 110 sets a 12cm-disc judgment flag (step S18) because the inserted disc is a 12cm disc, and the 5-sec timer is set again (step S10).

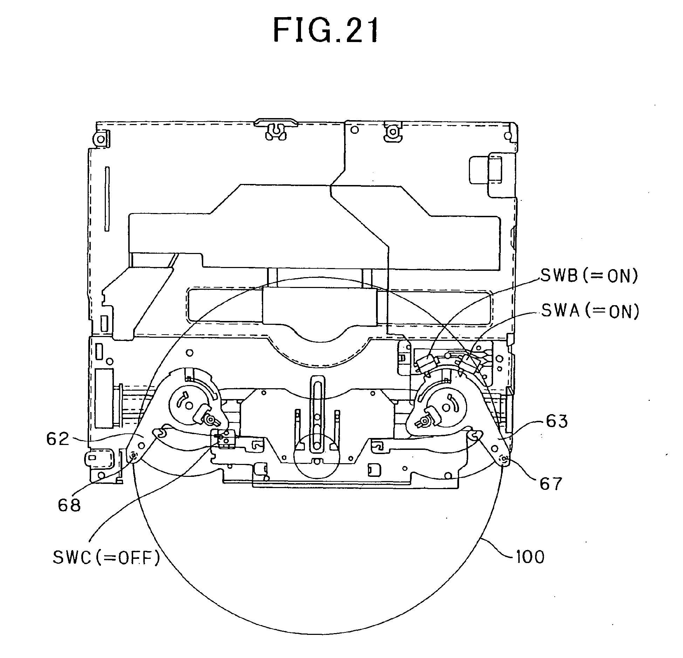

Fig. 21 is a diagram when the 12cm disc is being loaded.
The controller 110 further judges whether the reloading switch SWB is set to OFF state (step S20).
In the judgment of step S20, if the reloading switch SWB is ON-state (step S20; No), that is, if the inserted disc is a 12cm disc, the controller 110 judges whether the 5-sec timer is time out (step S21).
In the judgment of step S 21, if the 5-sec timer has not yet been time-out (step S21; No(, the controller 110 shifts the processing to the step S20 again.

In the judgment of the step S21, if the 5-sec timer is time-out (step S21; Yes), the controller 110 shifts to loading retry processing described later (step S22).
In the judgment of the step S20, if the reloading switch SWB is set to OFF state (step S20; Yes), the disc loading succeeds. Therefore, the controller 110 sets the 5-sectimer again (step S19).
The controller 110 further judges whether the loading switch SWA is set to OFF-state (step S24).
In the judgment of the step S24, if the loading switch SWA is set to ON-state (step S24; No), the controller 110 judges whether the 5-sec timer is the time-out (step S25).

In the judgment of the step S25, if the 5-sec timer has not yet been the time-out (step S25; No), the controller 110 shifts the processing to the step S24 again.
In the judgment of the step S25, if the 5-sec timer is time-out (step S25; Yes), the controller 110 shifts to a loading retry processing described later (step S26).
In the judgment of the step S24, if the loading switch SWA is set to OFF state (step S24; Yes), the controller 110 sets the 5-sec timer again (step S27).
The controller 110 further judges whether the chucking switch SWC is set to ON-state.

In the judgment of the step S28, if the chucking switch SWC is set to OFF-state (step S28; No) , the controller 110 judges whether the 5-sec timer is time-out (step S29) is time-out.
In the judgment of the step S29, if the 5-sec timer has not yet been time-out (step S29; No), the controller 110 shifts the processing to the step S28 again.
In the judgment of the step S29, if the 5-sec timer is time-out (step S29; Yes), the controller 110 shifts to the loading retry processing described later (step S30).

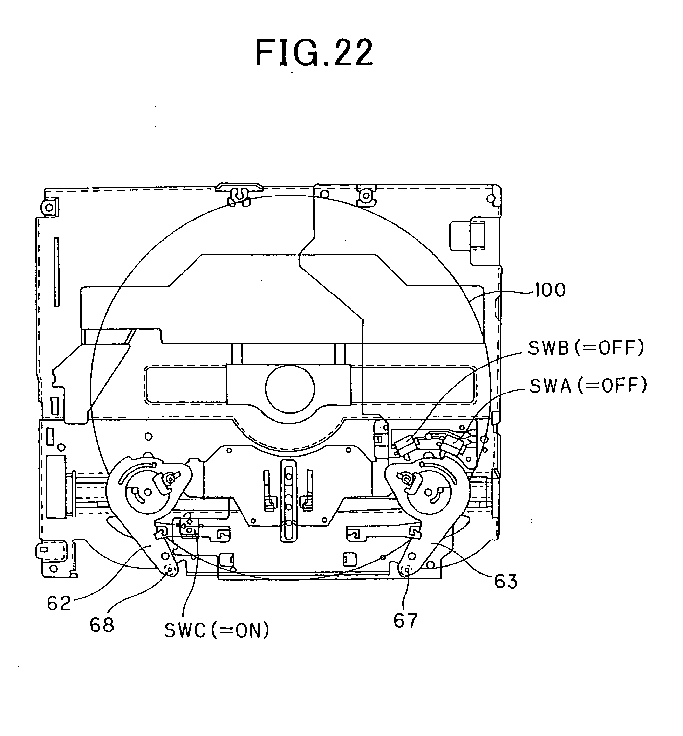

Fig. 22 is a diagram when the disc is loaded to a normal position.
In the judgment of the step S28, if the chucking switch SWC is set to ON-state (step S28; Yes), it means that the disc is loaded to a normal position as shown in Fig. 22. Therefore, the controller 110 executes the processing of stopping the loading motor 24 (step S31).

Subsequently, the controller 110 judges whether storage of disc diameter data is completed (step S32). If the storage of the disc diameter data has not yet been completed (step S32; No), the controller 110 is set to a standby state.
In the judgment of the step S32, if the storage of the disc diameter data is completed (step S32; Yes), the controller 110 chucks the disc and finishes the processing (step S33).

Next, the loading retry processing will be described.

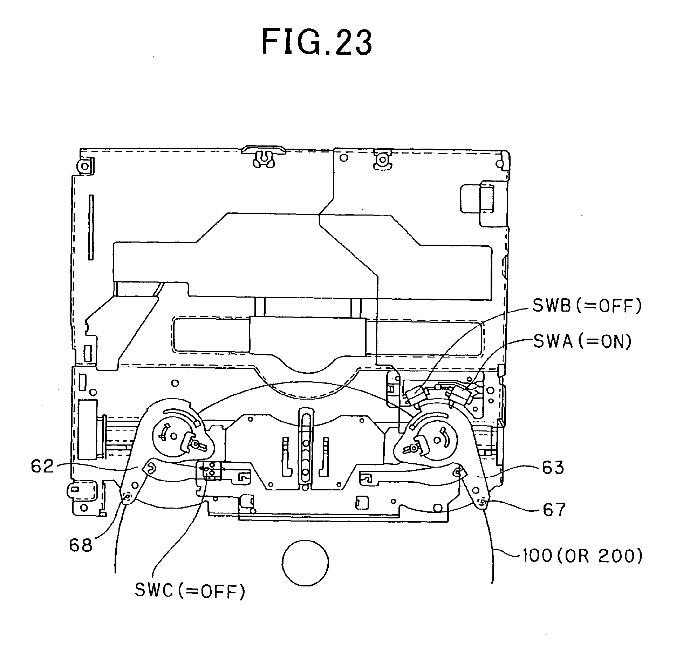

Fig. 23 is a diagram in the disc loading retry processing.

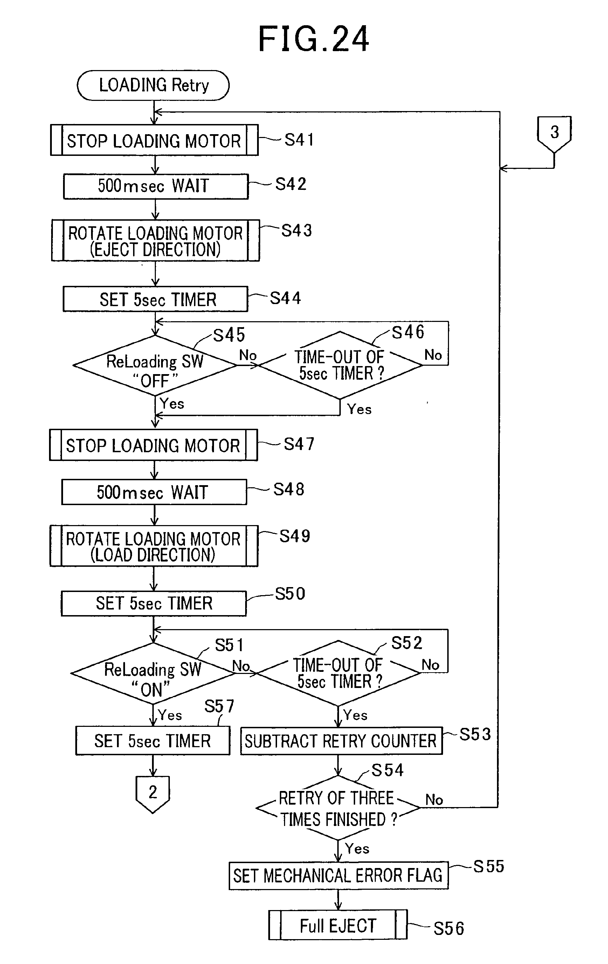

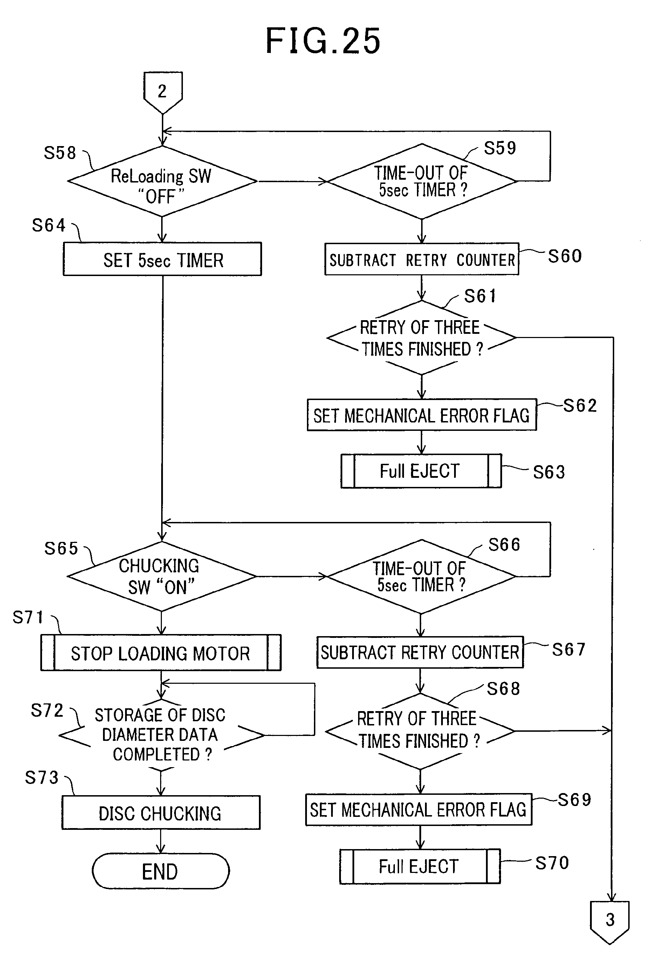

Fig. 24 is a processing flowchart (part 1) of the loading retry processing. Fig. 25 is a processing flowchart (part 2) of the loading retry processing.
When the processing is shifted to the loading retry processing, that is, when the controller fails in the disc loading, the controller 110 executes the processing of stopping the loading motor 24 (step S41).

Subsequently, the controller 110 waits for 500msec (step S42), and rotates the loading motor 24 in the eject direction to feed the disc in the discharge direction (eject direction) (step S43).
Subsequently, the controller 110 sets the 5-sec timer (step S44).
Subsequently, the controller 110 judges whether the disc is fed to a position shown in Fig. 23 and the reloading switch SWB is set to OFF-state (step S45).

In the judgment of the step S45, when the reloading switch SWB is set to ON-state (step S45; No), the controller judges whether the 5-sec timer is time-out (step S46).
In the judgment of the step 46, if the 5-sec timer has not yet been time-out (step S46; No), the controller 110 shifts the processing to the step S45 again. In the judgment of the step S46, if the 5-sec timer is time-out (step S46; Yes), the controller 110 shifts the processing to the step S47.
In the judgment of the step S45, if the reloading switch SWB is set to OFF-state (step S45; Yes), the controller 110 executes the processing of stopping the loading motor 24 (step S47).

Subsequently, the controller 110 waits for 500msec (step S48), the controller 110 rotates the loading motor 24 in the loading direction to feed the disc in the loading direction (step S49).
Subsequently, the controller 110 sets the 5-sec timer (step S50).
Subsequently, the controller 110 judges whether the reloading switch SWB is set to ON-state (step S51).
In the judgment of the step S51, if the reloading switch SWB is set to OFF-state (step S51; No), the controller 110 judges whether the 5-sec timer is time-out (step S52).

In the judgment of the step S52, if the 5-sec timer has not yet been time-out (step S52; No), the controller 110 shifts the processing to the step S51 again.
In the judgment of the step S52, if the 5-sec timer is time-out (step S52; yes), the controller 110 subtracts a retry counter (in this embodiment, initial value = 3) (step S53), and judges whether the loading retry is executed at a predetermined frequency (three times in this embodiment) (step S54). Specifically, on the basis of a judgment as to whether the value of the retry counter = 0, the controller 110 judges whether the loading retry is executed at the predetermined frequency.
In the judgment of the step S54, if the loading retry has not yet been executed at the predetermined frequency (step S54; No), the controller 110 shifts the processing to the step S41 again, and executes the same processing.

In the judgment of the step S54, if the loading retry has been executed at the predetermined frequency (step S54; Yes), the controller 110 sets a mechanical error flag representing that the loading cannot be mechanically performed (step S55), and shifts the processing to the full eject processing to discharge the disc (step S56).
In the judgment of the step S51, if the reloading switch SWB is set to ON-state (step S51; Yes), the controller 110 sets the 5-sec timer (step S57).
Subsequently, the controller 110 judges whether the reloading switch SWB is set to OFF-state (step S58).
In the judgment of the step S58, if the reloading switch SWB is set to ON-state (step S58; No), the controller 110 judges whether the 5-sec timer is time-out (step S59).

In the judgment of the step S59, if the 5-sec timer has not yet been time-out (step S59; No), the controller 110 shifts the processing to the step S58 again.
In the judgment of the step S59, if the 5-sec timer is time-out (step S59; Yes), the controller 110 subtracts the retry counter (step S60), and judges whether the loading retry has been executed at a predetermined frequency (step S61).
In the judgment of the step S61, if the loading retry has not yet been executed at the predetermined frequency (step S61; No), the controller 110 shifts the processing to the step S41 again, and executes the same processing.

In the judgment of the step S61, if the loading retry has not yet been executed at the predetermined frequency (step S61; Yes), the controller 110 sets a mechanical error flag representing that the loading cannot be mechanically performed (step S62), and shifts the processing to the full eject processing to discharge the disc (step S63).
In the judgment of the step S58, if the reloading switch SWB is set to OFF-state (step S58; Yes), the controller 110 subsequently sets the 5-sec timer (step S64).

Subsequently, the controller 110 judges whether the chucking switch SWC is set to ON-state (step S65).
In the judgment of the step S65, if the chucking switch SWC is set to OFF-state (step S65; No) , the controller 110 judges whether the 5-sec timer is time-out (step S66).
In the judgment of the step S66, if the 5-sec timer has not yet been time-out (step S66; No), the controller 110 shifts the processing to the step S65 again. In the judgment of the step S66, if the 5-sec timer is time-out (step S66; Yes), the controller 110 subtracts the retry counter (step S67), and judges whether the loading retry is executed at a predetermined frequency (step S68).

In the judgment of the step S68, if the loading retry has not yet been executed at the predetermined frequency (step S68; No), the controller shifts the processing to the step S41, and executes the same processing.
In the judgment of the step S68, if the loading retry has not yet been executed at a predetermined frequency (step S68; Yes), the controller 110 sets a mechanical error flag representing that the loading cannot be mechanically performed (step S69), and shifts the processing to the full eject processing to discharge the disc (step S70).
In the judgment of the step S65, if the chucking switch SWC is set to ON-state (step S65; Yes), it means that the disc is loaded to a normal position, and thus the controller 110 executes the processing of stopping the loading motor (step S71).

Subsequently, the controller 110 judges whether storage of disc diameter data is completed (step S72), and if the storage of the disc diameter data has not yet been completed (step S72; No), the controller is set to a standby state.
In the judgment of the step S72, if the storage of the disc diameter data is completed (step S72; Yes), the controller 110 chucks the disc and finishes the processing (step S73).

Next, the full eject processing will be described.

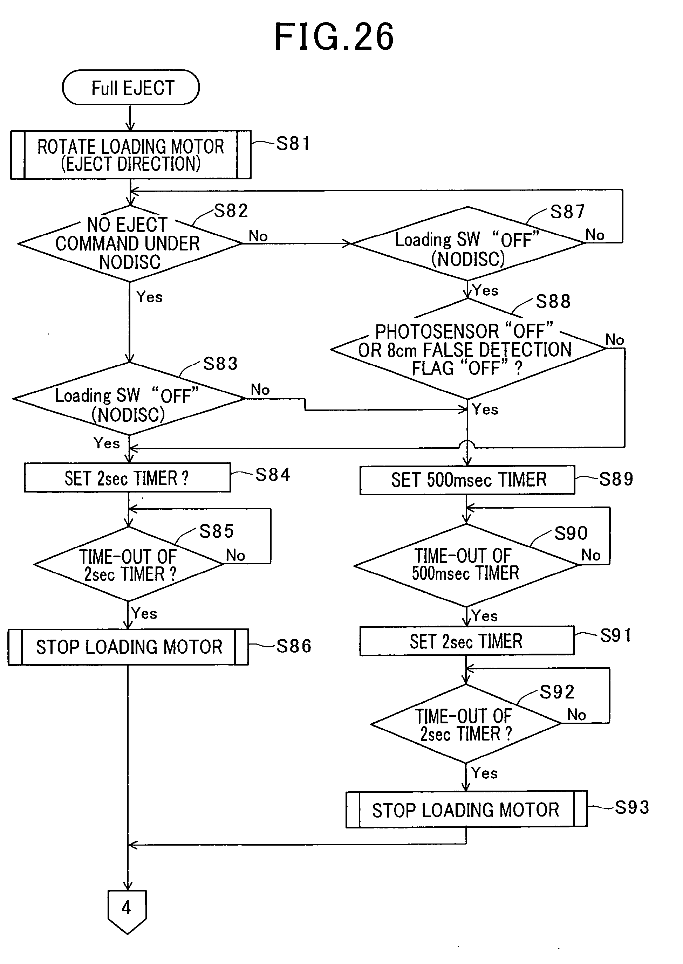

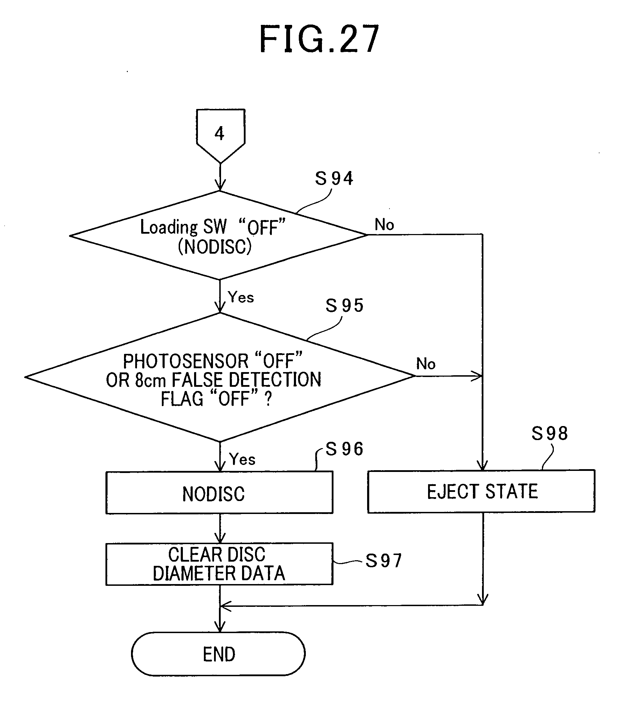

Fig. 26 is a processing flowchart (part 1) of the full eject processing. Fig. 27 is a processing flowchart (part 2) of the full eject processing.
When the processing is shifted to the full eject processing, the controller 110 first rotates the loading motor 24 in the eject direction (step S81).
Subsequently, the controller 110 judges whether there is an eject command under a disc non-insertion (NODISC) state (step S82).
In the judgment of the step S82, if there is no eject command under the disc non-insertion (NODISC) state (step S82; Yes), the controller 110 judges whether the loading switch SWA is set to OFF, that is, whether the disc player is under the disc non-insertion (NODISC) state (step S83).

In the judgment of the step S83, if the loading switch SWA is set to ON, that is, if the disc player is under the disc insertion state (step S83; No), the processing is shifted to the step S89.
In the judgment of the step S83, if the loading switch SWA is set to OFF, that is, if the disc player is under the disc non-insertion (NODISC) state, the controller 110 sets a 2-second timer (step S84).
Subsequently, the controller 110 judges whether the 2-second timer is time-out (step S85), and it is set to a standby state if the 2-second timer is not time-out.
In the judgment of the step S85, if the 2-second timer is time-out (step S85; Yes), the controller 110 executes the processing of stopping the loading motor (step S86), and shifts the processing to the step S94.

On the other hand, in the judgment of the step S82, if there is an eject command at the disc non-insertion (NODISC) time (step S82; No), the controller 110 judges whether the loading switch SWA is set to OFF, that is, whether the disc player is under the disc non-insertion (NODISC) state (step S87).
In the judgment of the step 87, if the loading switch SWA is set to ON, that is, the disc player is under the disc insertion state (step S87; No), the controller 110 shifts the processing to the step S82 again.
In the judgment of the step S87, if the loading switch SWA is set to OFF, that is, the disc player is under the disc non-insertion (NODISC) state, the controller 110 judges whether a photosensor is set to OFF or an 8cm-disc false detection flag is set to OFF (step S88).

In the judgment of the step S88, if the photosensor or the 8cm-disc error detection flag is set to ON (step S88; No), the controller 110 shifts the processing to the step S84.
In the judgment of the step S88, if the photosensor is set to OFF or the 8cm-disc false detection flag is set to OFF, a 500msec timer is set (step S89).
Subsequently, the controller 110 judges whether the 500msec timer is time-out or not (step S90), and if it is not time-out, the controller 110 is set to a standby state.
In the judgment of the step S90, if the 500msec timer is time-out (step S90; Yes), the controller 110 sets the 2-second timer (step S91).

Subsequently, the controller 110 judges whether the 2-second timer is time-out or not (step S92), and if it is not time-out, the controller 110 is set to a standby state.
In the judgment of the step S92, if the 2-second timer is time-out (step S92; Yes), the controller 110 executes the processing of stopping the loading motor 24 (step S93), and judges whether the loading switch SWA is set to OFF, that is, the disc player is under the disc non-insertion (NODISC) state or not (step S94).
In the judgment of the step S94, if the loading switch SWA is set to ON, that is, the disc player is under the disc insertion state (step S87; No), the controller 10 judges that the disc player is under the eject state, and finishes the processing (step S98).
In the judgment of the step S94, if the loading switch SWA is set to OFF, that is, the disc player is under the disc non-insertion (NODISC) state, the controller 110 judges whether the photosensor or the 8cm-disc false detection flag is set to OFF (step S95).

In the judgment of the step S95, if the photosensor or the 8cm-disc false detection flag is set to ON (step S95; No), the controller 110 judges that the disc player is under the eject state, and finishes the processing (step S98).
In the judgment of the step S95, if the photosensor or the 8cm-disc false detection flag is set to OFF, the controller judges that the disc player is under the disc non-insertion (NODISC) state (step S96), the controller clears the disc diameter data and finishes the processing (step S97).

As described above, according to this embodiment, the pair of gate members are provided at the insertion port, and the diameter of the disc can be mechanically identified from the dimension of the outer shape based on the time-variation of the swing angle of the gate members during the loading operation. Accordingly, the disc diameters of not only general discs, but also partially-transparent discs can be surely detected, and the reproduction control can be surely performed. The foregoing description relates to the reproducing apparatus. However, the present invention may be applied to a recording and reproducing apparatus. Furthermore, the foregoing description is made to the 8cm disc and the 12cm disc, however, the present invention may be applied to discs having other dimensions by using the same method. Still furthermore, the present invention may be applied to discs of three or more kinds of disc diameters.

## Claims

1. A disc player for loading a disc inserted in an insertion port to the inside of a main body to reproduce the disc, **characterized by** comprising a pair of gate members that are disposed so as to be allocated to both the sides of the insertion port substantially with respect to the center of the insertion port, brought into contact with the outer peripheral portion of the inserted disc and evacuated in a side direction of the insertion port.

2. The disc player according to claim 1, further comprising lock means for preventing the evacuation of the pair of gate members in the side direction when the disc is inserted into the insertion port while displaced substantially from the center of the insertion port in the side direction of the insertion port.

3. The disc player according to claim 1, further comprising lock means for preventing the evacuation of the pair of gate members in the side direction when the disc is inserted into the insertion port under the state that the disc is displaced substantially from the center of the insertion port in the side direction of the insertion port and comes into contact with only one of the gate members.

4. The disc player according to claim 1, wherein the pair of gate members comprise a pair of turn plates that are freely swingably mounted through support members on the outer surface of a chassis of the main body, and a pair of gate pins that are secured to the turn plates so as to face the insertion port.

5. The disc player according to claim 4, wherein the pair of turn plates are joined to each other at base portions thereof through a joint plate, the joint plate is provided with a pin, the pin is engagedly fitted in an elongated hole formed in the' chassis, arcuate grooves are formed at both the hole walls in the middle of the elongated hole so as to be expanded in diameter as compared with the width of the elongated hole, and when the disc is inserted while coming into contact with only one of the gate members, the pin is engagedly fitted in one of the arcuate grooves to prevent the evacuation of the pair of gate members in the side direction.

6. The disc player according to claim 4, wherein the pair of turn plates are joined to each other at base portions thereof through a joint plate, a guide hole is formed in the joint plate so as to extend in a disc insertion direction, a guide portion that is fitted in the guide hole is provided to a chassis, and the joint plate is reciprocated in the disc insertion direction along the guide portion interlockingly with a swing motion of each of the turn plates.

7. The disc player according to claim 6, wherein the guide portion is formed integrally with the chassis by cutting and erecting a part of the chassis.

8. The disc player according to any one of claims 1 to 7, wherein the pair of gate members are urged to the center of the insertion port by urging means.

9. The disc player according to claim 1, wherein a loading roller mounted on a freely swingable roller plate is disposed at the insertion port of the main body, the roller plate is swung interlockingly with a pull-in operation of pulling a disc from the insertion port to a drive unit, thereby separating the loading roller from the drive unit, and the roller plate is provided with a regulating unit for regulating the opening of the pair of gate members in the side direction when the disc is pulled in and the roller plate is swung interlockingly with the pull-in operation.

10. The disc player according to claim 9, wherein the regulating unit is formed so as to project upwardly from the front end portion of the roller plate.

11. The disc player according to claim 9, wherein a plurality of the regulating units are formed so as to be spaced from one another at predetermined intervals.

12. The disc player according to claim 9, wherein the pair of gate members comprise a pair of turn plates that are freely swingably mounted through support members on the outer surface of a chassis of the main body, and a pair of gate pins that are secured to the turn plates and face the insertion port, the pair gate pins and the regulating units being overlapped with each other in the height direction of the insertion port.

13. The disc player according to claim 1, further comprising:
a first detector for detecting whether the swing angle of the gate members is equal to a first swing angle or more in connection with the passage of the disc;
a second detector for detecting whether the swing angle of the gate members is not less than a second swing angle which is larger than the first swing angle in connection with the passage of the disc; and
a disc diameter identifier for identifying the diameter of a disc as a loading target on the basis of time-variation of the detection state of the first detector and the detection state of the second detector in connection with the loading.

14. The disc player according to claim 13, wherein the disc diameter detector identifies that a disc having a first diameter is loaded when only the first detector is set to the detection state from the start of the loading till the end of the loading in connection with the loading, and identifies that a disc having a second diameter larger than the first diameter is loaded when both the first detector and the second detector are set to the detection states from the start of the loading till the end of the loading in connection with the loading.

15. The disc player according to claim 13, wherein the first detector and the second detector have mechanical switches, and at least one of the gate members is provided with an operation holding portion for actuating the mechanical switch in connection with a swinging motion of the gate member caused by the passage of the disc and holding the state concerned when the swing angle is within a predetermined swing angle range.

16. The disc player according to claim 13, further comprising a disc diameter data storage unit for storing an identification result of the disc diameter identifier as disc diameter data.

17. The disc player according to claim 13, further comprising a lock unit for preventing evacuation of the pair of gate members in the side direction when the disc is inserted into the insertion port while displaced substantially from the center of the insertion port in the side direction of the insertion port.

18. The disc player according to claim 13, wherein the pair of gate members are urged to the center of the insertion port by a urging member.

19. A method of controlling a disc player equipped with a pair of gate members that are disposed so as to be allocated to both the sides of an insertion port substantially with respect to the center of the insertion port and evacuated in a side direction of the insertion port while swung in contact with the outer peripheral portion of the inserted disc, an inserted disc inserted in the insertion port being loaded into the inside of the main body to reproduce the disc, comprising:
a first detecting step of detecting whether a swing angle of the gate members is equal to a first swing angle or more in connection with passage of the disc;
a second detecting step of detecting whether the swing angle of the gate members is not less than a second swing angle larger than the first swing angle in connection with the passage of the disc; and
a disc diameter identifying step of identifying the diameter of a disc as a loading target on the basis of time-variation of the detection state of the first detector and the detection state of the second detector in connection with loading.

20. A control program of making a computer control a disc player having a pair of gate members that are disposed so as to be allocated to both the sides of an insertion port substantially with respect to the center of the insertion port and evacuated in a side direction of the insertion port while swung in contact with the outer peripheral portion of the inserted disc, a first detector for detecting whether a swing angle of the gate members is equal to a first swing angle or more, and a second detector for detecting whether the swing angle of the gate members is not less than a second swing angle larger than the first swing angle, an inserted disc inserted in the insertion port being loaded into the inside of the main body to reproduce the disc, comprising:
detecting whether the swing angle of the gate members is equal to the first swing angle or more in connection with passage of the disc;
detecting whether the swing angle of the gate members is not less than the second swing angle larger than the first swing angle in connection with the passage of the disc; and
identifying the diameter of the disc as a loading target on the basis of the time-variation of the detection state of the swing angle in connection with the loading.
